# EUROPEAN PATENT APPLICATION

(11) **EP 4 518 277 A1**
(43) Date of publication of application: **05.03.2025**
(21) Application number: 23794663.7
(22) Date of filing: 16.01.2023
(51) Int. Cl.: H04L 45/00

(54) **ROUTER ADVERTISEMENT MESSAGE PROCESSING METHOD, APPARATUS, STORAGE MEDIUM AND ELECTRONIC APPARATUS**

(30) Priority: 28.04.2022 CN 202210461664
(71) Applicant: ZTE Corporation, Shenzhen, Guangdong 518057 (CN)
(72) Inventor: PENG, Shaofu, Shenzhen, Guangdong 518057 (CN)
(74) Representative: Brunazzi, Stefano
(86) International application number: PCT/CN2023/072430
(87) International publication number: WO 2023/207227

(57) **Abstract**

Provided are a method and apparatus for processing a router advertisement message, a storage medium, and an electronic apparatus. The method includes acquiring, on a current node, a border gateway protocol (BGP) router advertisement message transmitted by a previous node, where the BGP router advertisement message carries information of a propagation path, the propagation path is a path in a direction from a network egress node to a network ingress node, the BGP router advertisement message indicates a BGP next-hop node in a forwarding direction, and the forwarding direction is a direction from the network ingress node to the network egress node; and determining, in a case that the BGP next-hop node and the current node are two adjacent nodes on the propagation path, an underlying transport path from the current node to the BGP next-hop node according to instruction information corresponding to the current node of the information of the propagation path. According to examples of the disclosure, the technical problem that an underlying transport path cannot be flexibly determined in the related art is solved.

## Description

### Technical Field

Examples of the disclosure relate to the field of communication, and particularly relate to a method and apparatus for processing a router advertisement message, a storage medium, and an electronic apparatus.

### Background

Increasing requirements have been set out for network address spaces as the internet technology advances and progresses. Traditionally, one internet protocol (IP) of a network server has only one network transport line, and it is difficult to establish interconnected communication between different types of network transport lines. Thus, a border gateway protocol (BGP) is formulated to overcome defects of internet communication.

In a large-scale network crossing a plurality of domains in the related art, the BGP is generally used to provide an end-to-end intent path. The intent path means that a BGP router will select a transport path at a more underlying layer according to an explicit intent when iterating a next hop. That is, the BGP router is required to carry intent information during advertisement. Since the transport path at a more underlying layer is a traffic engineering path established on the basis of a specific intent, the intent can also be referred to as a traffic engineering target in a network providing a transport service. A plurality of methods are available to carry an intent in the BGP router during advertisement at present. For instance, "classful transport" subsequent address family identifier network layer reachable information (SAFI NLRI) and a "transport class" route target extended community attribute are defined in draft-kaliraj-idr-bgp-classful-transport-planes-13 to carry intent information, border gateway protocol color-aware routing subsequent address family identifier network layer reachable information (BGP CAR SAFI NLRI) is defined in draft-dskc-bess-bgp-car-03 to carry intent information, and a color extended community attribute is directly used by draft-zhou-idr-inter-domain-lcu-04 to carry intent information. In the disclosure, these BGP routers carrying intent information and similar ones are collectively referred to as BGP-intent routers.

Generally, a node that receives a BGP-intent router advertisement message will locally interpret an intent according to intent-configuration information (also referred to as an intent-template) to establish or select an existing transport path to a message advertiser that satisfies the intent. The intent configuration information includes a set of constraints, such as a link bandwidth size required to be provided in the path, defined minimum and maximum delays, defined delay jitter, a defined packet loss rate, inclusion or exclusion of specific nodes or links, and computation paths limited in specific virtual networks. At an ingress provider edge (PE) node (that is, a node responsible for service access, or referred to as an network ingress node) in a network, a BGP-intent router to an egress PE node (that is, a node responsible for service output, or referred to as a network egress node) that matches service requirements is selected according to a service level agreement (SLA) of a service. That is, intent configuration information at the ingress PE node is generally consistent with the SLA of the service, but this does not mean that intent configuration information on an intermediate node should also be consistent with the SLA of the service. For example, in a case of a forwarding behavior of the BGP router crossing a plurality of domains, an SLA satisfying a service is required to "provide a path having a delay upper limit of 100 ms from the ingress PE (a network ingress node) to the egress PE (a network egress node)". Obviously, the delay of 100 ms refers to an upper limit of accumulated delays from end to end, rather than accumulated delays of an intermediate path during BGP router forwarding. In other words, each BGP speaker (or referred to as a BGP node) in the intermediate path cannot establish or select an existing transport path to a next BGP speaker according to the delay of 100 ms. In order to solve the problem, a method is defined in draft-peng-idr-bgp-metric-credit-00 to carry a metric credit attribute in a BGP router advertisement to provide conditions for iteration of underlying paths between adjacent BGP speakers. However, the method is applicable to only some simple scenarios but relatively complex scenarios.

It can be seen that in the related art, if a BGP node determines an underlying transport path to a next-hop node according to locally pre-configured intent configuration information, the intent configuration information at the BGP node cannot be flexibly configured or updated, the underlying transport path cannot be flexibly determined, and relatively complex scenarios cannot be satisfied. But no effective solution has been provided yet.

### Summary

Examples of the disclosure provide a method and apparatus for processing a router advertisement message, a storage medium, and an electronic apparatus, so as to solve at least the technical problem that an underlying transport path cannot be flexibly determined in the related art.

According to an example of the disclosure, a method for processing a router advertisement message is provided. The method includes acquiring, on a current node, a border gateway protocol (BGP) router advertisement message transmitted by a previous node, where the BGP router advertisement message carries information of a propagation path, the propagation path is a path in a direction from a network egress node to a network ingress node, the BGP router advertisement message indicates a BGP next-hop node in a forwarding direction, and the forwarding direction is a direction from the network ingress node to the network egress node; and determining, in a case that the BGP next-hop node and the current node are two adjacent nodes on the propagation path, an underlying transport path from the current node to the BGP next-hop node according to instruction information corresponding to the current node of the information of the propagation path.

According to another example of the disclosure, an apparatus for processing a router advertisement message is provided. The apparatus includes a first acquisition module configured to acquire, on a current node, a border gateway protocol (BGP) router advertisement message transmitted by a previous node, where the BGP router advertisement message carries information of a propagation path, the propagation path is a path in a direction from a network egress node to a network ingress node, the BGP router advertisement message indicates a BGP next-hop node in a forwarding direction, and the forwarding direction is a direction from the network ingress node to the network egress node; and a first determination module configured to determine, in a case that the BGP next-hop node and the current node are two adjacent nodes on the propagation path, an underlying transport path from the current node to the BGP next-hop node according to instruction information corresponding to the current node of the information of the propagation path.

According to another example of the disclosure, a computer-readable storage medium is further provided. The computer-readable storage medium stores a computer program. The computer program is configured to, when executed by a processor, implement steps of any one of the above method examples.

According to another example of the disclosure, an electronic apparatus is further provided. The electronic apparatus includes a memory and a processor. The memory stores a computer program. The processor is configured to execute the computer program to implement steps of any one of the above method examples.

### Brief Description of the Drawings

Fig. 1 is a structural block diagram of hardware of a mobile terminal of a method for processing a router advertisement message according to an example of the disclosure;
Fig. 2 is a flow diagram of a method for processing a router advertisement message according to an example of the disclosure;
Fig. 3 is a schematic diagram of positions of information of propagation paths according to an example of the disclosure;
Fig. 4 is a first schematic diagram of attributes of information of propagation paths according to an example of the disclosure;
Fig. 5 is a second schematic diagram of attributes of information of propagation paths according to an example of the disclosure;
Fig. 6 is a third schematic diagram of attributes of information of propagation paths according to an example of the disclosure;
Fig. 7 is a schematic diagram of propagation paths in a direction from a network egress node to a network ingress node according to an example of the disclosure;
Fig. 8 is a schematic diagram of propagation paths in directions from a plurality of different network egress nodes to a network ingress node according to an example of the disclosure;
Fig. 9 is a schematic diagram of propagation paths in directions from a network egress node to a plurality of different network ingress nodes according to an example of the disclosure;
Fig. 10 is a schematic diagram of explicit propagation object path attributes (EPO path attributes) according to an example of the disclosure;
Fig. 11 is a schematic diagram of homologous and homoclinic transport paths having different intents according to an example of the disclosure;
Fig. 12 is a schematic diagram showing that a router advertisement carries a plurality of propagation paths to the same ingress provider edge (PE) according to an example of the disclosure;
Fig. 13 is a schematic diagram showing that a router advertisement carries a plurality of propagation paths to different ingress PEs according to an example of the disclosure; and
Fig. 14 is a structural block diagram of an apparatus for processing a router advertisement message according to an example of the disclosure.

### Detailed Description of the Embodiments

Examples of the disclosure will be described in detail below with reference to accompanying drawings and in combination with examples.

It should be noted that the terms of "first", "second", etc. in the description, claims and the above accompanying drawings of examples of the disclosure are used for distinguishing similar subjects instead of being used for describing a specific order or precedence order.

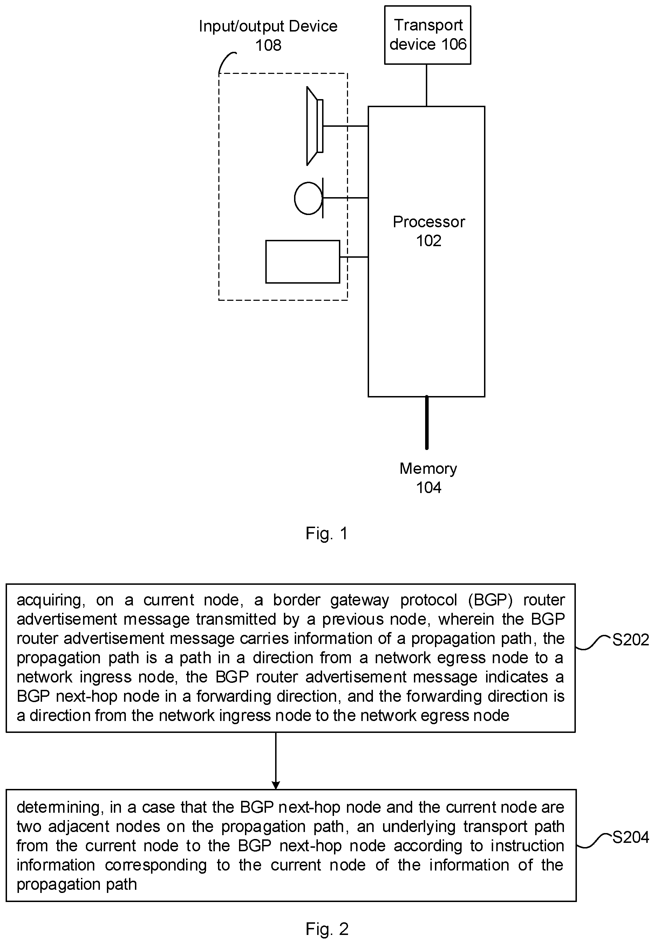

Method examples provided in examples of the disclosure may be executed in a mobile terminal, a computer terminal or a similar computation apparatus. With a case of running on a mobile terminal as an instance, Fig. 1 is a structural block diagram of hardware of a mobile terminal of a method for processing a router advertisement message according to an example of the disclosure. As shown in Fig. 1, the mobile terminal may include one or more (only one shown in Fig. 1) processors 102 (the processor 102 may include but is not limited to a processing apparatus such as a microcontroller unit (MCU) or a field-programmable gate array (FPGA)) and a memory 104 configured to store data. The above mobile terminal may further include a transport device 106 for a communication function and an input/output device 108. Those of ordinary skill in the art can understand that the structure shown in Fig. 1 is merely schematic and does not limit the structure of the above mobile terminal. For instance, the mobile terminal may further include more or fewer assemblies than those shown in Fig. 1, or have different configurations from those shown in Fig. 1.

The memory 104 may be configured to store a computer program such as a software program and module of application software, specifically such as a computer program corresponding to the method for processing a router advertisement message in an example of the disclosure. The processor 102 executes various functional applications and data processing by running the computer program stored in the memory 104, that is, implements the above method. The memory 104 may include a high-speed random access memory, and may further include a non-volatile memory, such as one or more magnetic storage apparatuses, flash memories, or other non-volatile solid-state memories. In some instances, the memory 104 may further include a memory remotely arranged with respect to the processor 102, the remote memory may be connected to the mobile terminal by means of a network. Instances of the above network include but are not limited to the internet, an enterprise intranet, a local area network, a mobile communication network and their combinations.

The transport device 106 is configured to receive or transmit data by means of a network. Specific instances of the above network may include a wireless network provided by a communication provider of the mobile terminal. In an instance, the transport device 106 includes a network interface controller (NIC), which may be connected to other network devices by means of a base station so as to be in communication with the internet. In an instance, the transport device 106 may be a radio frequency (RF) module, which is configured to be in communication with the internet in a wireless manner.

The example provides a method for collecting information. Fig. 2 is a flow diagram of a method for processing a router advertisement message according to an example of the disclosure. As shown in Fig. 2, the flow includes steps as follows:
S202: Acquire, on a current node, a border gateway protocol (BGP) router advertisement message transmitted by a previous node, where the BGP router advertisement message carries information of a propagation path, the propagation path is a path in a direction from a network egress node to a network ingress node, the BGP router advertisement message indicates a BGP next-hop node in a forwarding direction, and the forwarding direction is a direction from the network ingress node to the network egress node.
S204: Determine, in a case that the BGP next-hop node and the current node are two adjacent nodes on the propagation path, an underlying transport path from the current node to the BGP next-hop node according to instruction information corresponding to the current node of the information of the propagation path.

An executive body of the above steps may be a network device, such as a router or switch, a controller or control system, a device having a control capability, or other processing devices or processing units having similar processing capabilities. An instance (only an exemplary description, and other devices or modules may also execute the above operations during actual operations) in which the network device executes the above operations is taken for description.

In the above example, a plurality of nodes may transmit the border gateway protocol (BGP) router advertisement message. Further, a node having a higher priority can be preferentially determined from the plurality of nodes according to priorities of the plurality of nodes, and it is determined that the node transmits the BGP router advertisement message. For instance, the current node is node A, and node B, node C and node D may all transmit the BGP router advertisement message to node A, and priorities of the three nodes are node B > node C > node D. Therefore, it can be determined that node B transmits the BGP router advertisement message to node A according to a priority situation of node B > node C > node D. Moreover, when node B fails, node C can replace the node in real time to transmit the BGP router advertisement message to node A. In addition, there may be a plurality of types of BGP router advertisement messages. Therefore, different BGP router advertisement messages can be transmitted to node A according to the priority situation of node B > node C > node D, different BGP router advertisement messages can be transmitted to different nodes in sequence, different BGP router advertisement messages can be transmitted to node A by Node B, node C and node D simultaneously, or different BGP router advertisement messages may be simultaneously transmitted to different nodes, etc. It should be noted that the above illustration of the priorities of the nodes transmitting the BGP router advertisement message is only an example. The priorities of the nodes transmitting the BGP router advertisement message are not limited to the above example.

In the above example, the BGP router advertisement message may carry information of a plurality of propagation paths. The propagation paths may point to the same network ingress node or different network ingress nodes. In addition, the network egress node may determine a corresponding network ingress node on the basis of the information of the propagation paths carried in the BGP router advertisement message, and transmit the BGP router advertisement message to the network ingress node. Further, the network ingress node may determine, on the basis of the received BGP router advertisement message, a BGP next-hop node with which an underlying transport path is established. Then, in a case that it is determined that the BGP next-hop node and the network ingress node are two adjacent nodes on the same propagation path, the underlying transport path from the network ingress node to the BGP next-hop node is determined according to instruction information corresponding to the network ingress node in the information of the propagation paths. There may be a plurality of underlying transport paths from the network ingress node to the BGP next-hop node, and the underlying transport path determined on the basis of the instruction information is an optimum underlying transport path between the network ingress node and the BGP next-hop node. Therefore, different underlying transport paths may be determined according to different instruction information.

In the above example, the BGP router advertisement message transmitted between nodes carries the information of the propagation paths. The underlying transport path from the current node to the BGP next-hop node is determined according to the instruction information in the information of the propagation paths. That is, corresponding underlying transport paths can be flexibly determined by carrying different instruction information in different BGP router advertisement messages. In this way, in cases of different services on the same path, different BGP router advertisement messages can be transmitted on the transport path, and different BGP router advertisement messages carry different instruction information, such as different transport delay requirements. Thus, when the same node receives the above different BGP router advertisement messages, different underlying transport paths can be selected to satisfy requirements of different services. It can be seen that in the example of the disclosure, different BGP router advertisement messages carry different instruction information, and corresponding underlying transport paths are flexibly determined, such that the situation that a BGP node determines an underlying transport path with a next-hop node according to locally pre-configured intent configuration information is avoided. The technical problem that the underlying transport path cannot be flexibly determined in the related art is solved. The technical effect that the underlying transport path can be flexibly determined is achieved. More complex scenarios can be satisfied.

In an optional example, the information of the propagation path is located in a field of a newly added path attribute in the BGP router advertisement message, or in a field of an existing path attribute in the BGP router advertisement message. In the example, a vacant field in the BGP router advertisement message may be used for newly adding a path attribute, and the information of the propagation path is added to the field of the newly added path attribute. The information of the propagation path may also occupy a vacant byte of a field of an existing path attribute in the BGP router advertisement message. Moreover, the field of the newly added path attribute and the field of the existing path attribute may be fields including the same type of information or fields including different types of information. For instance, the information of the propagation path or information similar to the propagation path may be added to the field of the newly added path attribute and the field of the existing path attribute. In addition, instruction information, etc. may be added to the field of the existing path attribute. Certainly, instruction information, et. may also be added to the field of the newly added path attribute. It should be noted that the above illustration of the field of the newly added path attribute and the field of the existing path attribute are merely an example. The field of the newly added path attribute and the field of the existing path attribute are not limited to the above instance.

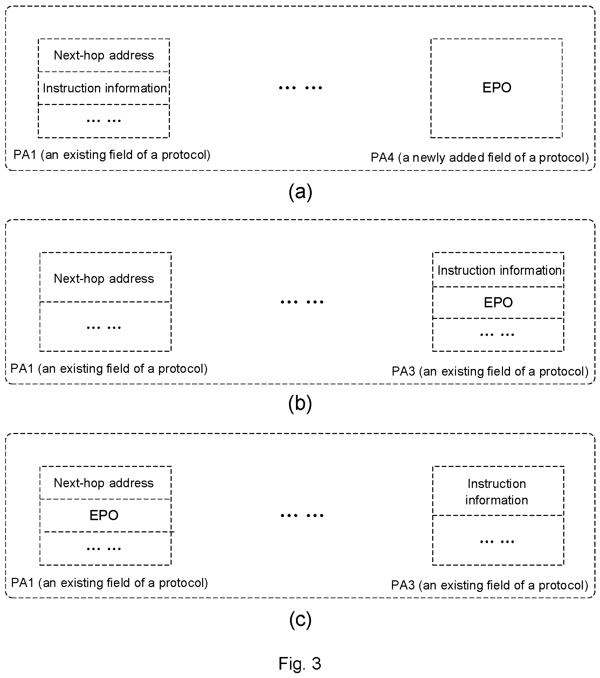

In the above example, Fig. 3 is a schematic diagram of positions of information of propagation paths according to an example of the disclosure. As shown in Fig. 3, PA1 and PA3 are fields of the existing path attribute in the BGP router advertisement message, PA4 is a field of the newly added path attribute in the BGP router advertisement message. As shown in Fig. 3(a), an explicit propagation object (EPO) attribute (that is, information of the propagation path) may be located in the field of the newly added path attribute. As shown in Figs. 3(b) and 3(c), an EPO attribute (that is, information of the propagation path) may be located in a vacant byte of the field of the existing path attribute. Thus, the position of the information of the propagation path may be adjusted according to an actual application situation.

In an optional example, the information of the propagation path carried in the BGP router advertisement message includes a node number field configured to represent number N of nodes on the propagation path, where N is a positive integer greater than or equal to 1; N node identity fields each configured to represent an identity of a corresponding node on the propagation path; and M instruction fields each configured to represent instruction information corresponding to a corresponding node on the propagation path, where M is a positive integer greater than or equal to 1 and less than or equal to N. In the example, the node number field may be represented by a Count, where the Count occupies 1 byte in each propagation path and represents a number of all nodes included in one propagation path. Moreover, each propagation path may start from a field of Count followed by one or more tuple<Flags, Node ID, Length of Instructions, Instructions Content> (tuple<flag field, node identity field, instruction length field, instruction field>). Each tuple corresponds to one node. The node identity field may be represented by a Node ID, and each node has a unique Node ID. For instance, in a case that there are two nodes having the same name and value, the two nodes may be distinguished by the Node IDs. In addition, a node may be identified through two methods. One is a multi-field node identification, that is, each node in the propagation path is identified through multi-field combination. The other one is single-field node identification, that is, all nodes in the propagation path are identified by one field. It should be noted that the illustration of the node number field Count, the node identity field Node ID, and the implementation methods for node identification mentioned above is merely an example. The node number field Count, the node identity field Node ID and the implementation methods for node identification are not limited only to the above instance.

In the above example, an instruction field may be represented by Instructions Content. The instruction field includes one or more specific instructions, and each instruction may be represented by tuple< IT, IV> (tuple<instruction type, instruction value>), where IT represents the instruction type, and IV represents the instruction value. Moreover, a specific IT may imply a length of a corresponding IV. For instance, an IT may be defined as follows: in a case of IT=0, an IV field has a length of 0. In a case of IT=1, the IT represents Metric Credit, the IV field is a metric credit value of 3 bytes, a unit of which may be determined by a Metric Type (an metric attribute, that is, accumulated interior gateway protocol metric attribute (AIGP Attribute)) of a BGP router. For instance, in a case that a Metric Type is a delay type, a unit of a metric credit value is microsecond (µs).

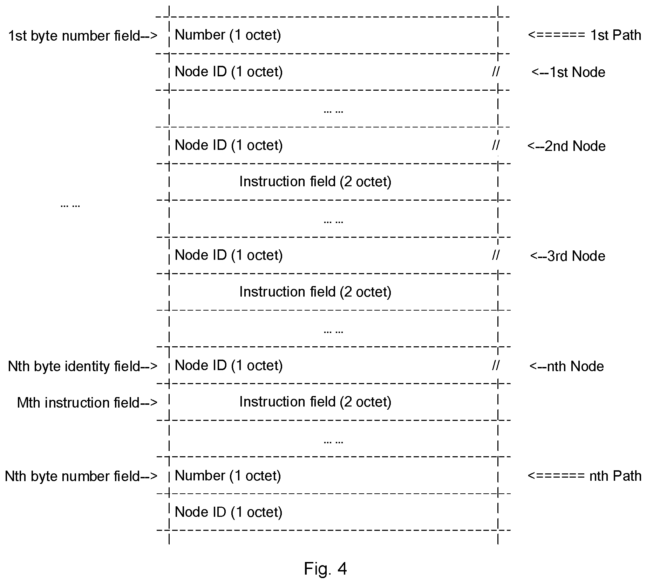

In the above example, Fig. 4 is a first schematic diagram of attributes of information of propagation paths according to an example of the disclosure. As shown in Fig. 4, a 1st path represents a first propagation path, an nth path represents an nth propagation path, a Count (1 octet) represents that a field of Count occupies 1 byte in the propagation path, a Node ID (1 octet) represents that a field of Node ID occupies 1 byte in the propagation path, and Instructions Content (2 octet) represents that a field of Instructions Content occupies 2 bytes in the propagation path. Moreover, each propagation path starts from a field of Count of one byte, and not the information of propagation paths on all BGP nodes on a complete propagation path includes fields of Instructions Content, but each node in each propagation path has to have a Node ID. Thus, each propagation path may include N node IDs and M fields of Instructions Content. It should be noted that numbers of bytes occupied by the field of Count, field of Node ID and field of Instructions Content mentioned above are merely an example. The numbers of the bytes occupied by the field of Count, field of Node ID and field of Instructions Content respectively are not limited to the above instance.

In an optional example, the information of the propagation path carried in the BGP router advertisement message further includes: N flag fields each configured to represent address information of a corresponding node on the propagation path and represent whether the corresponding node on the propagation path has the instruction field. In the example, the flag field may be represented by Flags, where Flags occupies 1 byte in each propagation path. Moreover, two flags are defined to represent different information respectively. One is A-Flag configured to represent address information of a corresponding node on the propagation path. For instance, in a case that A-Flag is 0, the flag represents an IPv4 address of 4 bytes. In a case that A-Flag is 1, the flag represents an IPv6 address of 16 bytes. The other one is I-Flag configured to represent whether a corresponding node on the propagation path has an instruction field. For instance, in a case that I-Flag is 0, the flag represents that a corresponding node on the propagation path has no instruction field. In a case that I-Flag is 1, the flag represents that a corresponding node on the propagation path has an instruction field. It should also be noted that in a case that I-Flag is 0, subsequent bytes include no instruction fields. It should be noted that the definition of Flags mentioned above and the illustration of A-Flag and I-Flag defined above are merely an example. The definitions of Flags and A-Flag and I-Flag defined are not limited to the above instance.

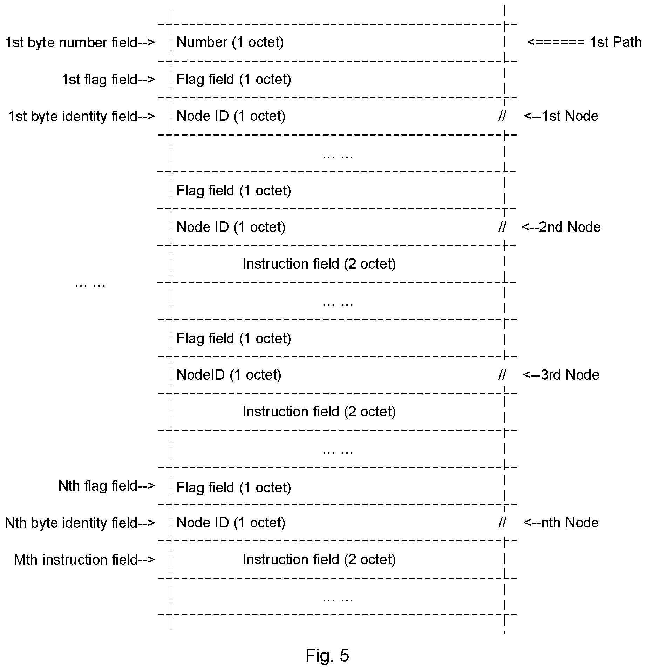

In the above example, Fig. 5 is a second schematic diagram of attributes of information of propagation paths according to an example of the disclosure. As shown in Fig. 5, Flags represents a flag field, and Flags (1 octet) represents that a Flags field occupies 1 byte in the propagation path. Moreover, Flags further includes address information of nodes and address information of all nodes on the propagation path. Further, in a case of a BGP router advertisement, a node receiving the BGP router advertisement message can be more accurately determined on the basis of the address information. Thus, each propagation path can include N flag fields.

In an optional example, the information of the propagation path carried in the BGP router advertisement message further includes: M instruction length fields each configured to represent a byte number of a corresponding instruction field of the M instruction fields. The N flag fields are further each configured to indicate whether a corresponding node on the propagation path has the instruction length field. In the example, an instruction length field may be represented by a Length of Instructions. The instruction length field may be located before the instruction field and configured to represent a number of bytes occupied by each instruction field. Moreover, in a case that I-Flag mentioned above is 0, it is indicated that a corresponding node on the propagation path has no instruction length field. In a case that I-Flag mentioned above is 1, it is indicated that a corresponding node on the propagation path has an instruction length field. It should also be noted that in a case that I-Flag is 0, subsequent bytes include no instruction length fields.

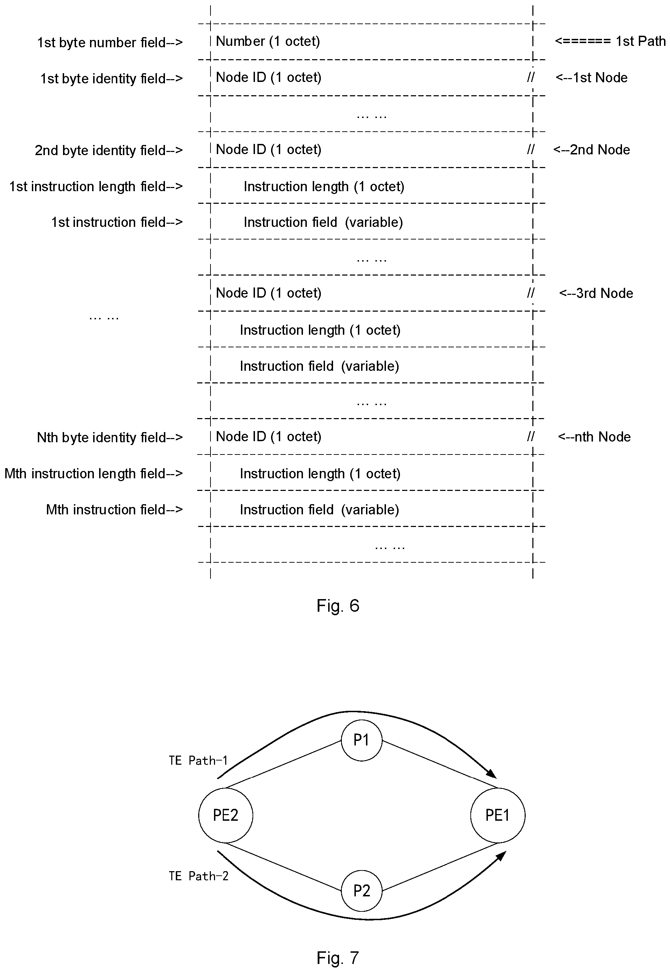

In the above example, Fig. 6 is a third schematic diagram of attributes of information of propagation paths according to the example of the disclosure. As shown in Fig. 6, a Length of Instruction (1 ocent) represents that a Length of Instruction field occupies 1 byte in the propagation path, Instruction Content (variable) represents that a number of bytes occupied by a field of Instruction Content in the propagation path is variable, and the number of the bytes occupied by the field of Instruction Content in the propagation path can be determined by means of the Length of Instruction field. Moreover, the instruction length field is similar to the instruction field, not information of propagation paths on all BGP nodes on a complete propagation path includes the instruction length field. Therefore, each propagation path may include M instruction length fields.

In an optional example, the propagation path includes one or more paths in the direction from the network egress node to the network ingress node. Each path is the path from the network egress node to the network ingress node or a part path of the path from the network egress node to the network ingress node. In the example, there may be a plurality of propagation paths for transporting a BGP router advertisement message. The plurality of propagation paths may point to the same network ingress node or different network entrance nodes. For instance, in a case that the propagation paths are B-A-C-D-E-F and B-A-G-D-E-F, the two propagation paths are propagation paths pointing to the same network ingress node. Moreover, the BGP router advertisement message is required to be transmitted by node B (that is, the network egress node) to node F (that is, the network ingress node). Then, the two propagation paths are two complete propagation paths in the direction from the network egress node to the network ingress node, and B-A-C(G)-D in the two propagation paths are part paths of the paths from the network egress node to the network ingress node. In a case that the propagation paths are B-A-C-D-E-F and B-A-C-D-E-G, the two propagation paths are propagation paths pointing to different network ingress nodes. Moreover, the BGP router advertisement message is required to be transmitted by node B (that is, the network egress node) to node F (or G, that is, the network ingress node). Then, the two propagation paths are two complete propagation paths in the direction from the network egress node to the network ingress node, and C-D-E-F(G) in the two propagation paths is a part path of the paths from the network egress node to the network ingress node. It should be noted that the above illustration of the propagation path is merely an example. The propagation path is not limited to the above instance.

In the above example, Fig. 7 is a schematic diagram of propagation paths in a direction from a network egress node to a network ingress node according to an example of the disclosure. As shown in Fig. 7, PE1 represents the network egress node, PE2 represents the network ingress node, P1 and P2 represent different nodes from the network egress node to the network ingress node respectively, and TE path-1 and TE path-2 represent different underlying transport paths iterated from PE2 to PE1.

In an optional example, in a case that the network egress node includes a plurality of different egress nodes, the propagation path includes a plurality of paths in directions from the plurality of different egress nodes to the network ingress node. Each path is a path from a corresponding egress node to the network ingress node or a part path of the path from the corresponding egress node to the network ingress node. In the example, a plurality of different egress nodes may transmit the BGP router advertisement message. The plurality of different egress nodes may transmit the same BGP router advertisement message or different BGP router advertisement messages. During practical application, in a case that the propagation paths are A-D-F-G, B-D-F-G and C-D-F-G, where the network egress nodes include egress node A, egress node B and egress node C, A-D-F-G, B-D-F-G and C-D-F-G are three complete paths in directions from corresponding egress node A, egress node B and egress node C to the network ingress node respectively, and A-D, B-D and C-D are part paths of the three complete paths in directions from corresponding egress node A, egress node B and egress node C to the network ingress node respectively. Moreover, the egress nodes included in the part paths of the paths may not be egress nodes in the above three complete propagation paths (that is, may be part paths composed of other egress nodes capable of transmitting the BGP router message to network ingress nodes).

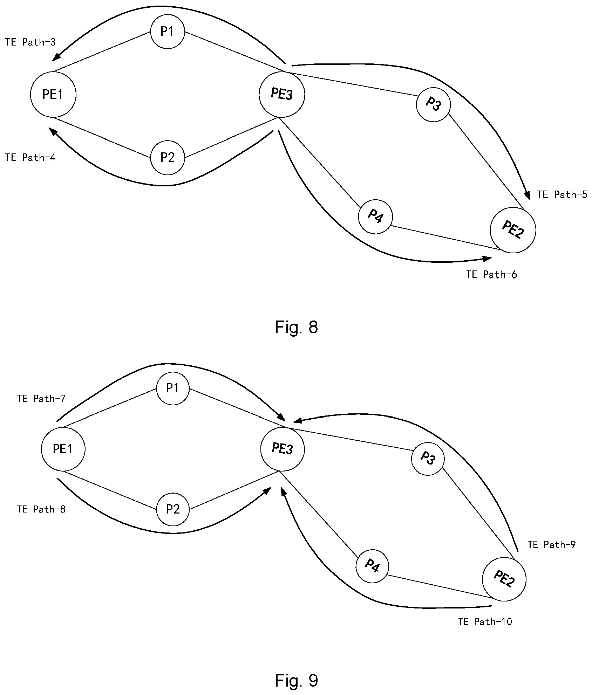

In the above example, Fig. 8 is a schematic diagram of propagation paths in directions from a plurality of different network egress nodes to a network ingress node according to an example of the disclosure. As shown in Fig. 8, PE1 and PE2 represent network egress nodes, PE3 represents a network ingress node, P1, P2, P3 and P4 represent different nodes from the network egress node to the network ingress node, TE path-3 and TE path-3 represent different underlying transport paths iterated from PE3 to PE1, and TE path-5 and TE path-6 represent different underlying transport paths iterated from PE3 to PE2.

In an optional example, in a case that the network ingress node includes a plurality of different ingress nodes, the propagation path includes a plurality of paths in directions from the network egress node to the plurality of different ingress nodes. Each path is a path from the network egress node to a corresponding ingress node or a part path of the path from the network egress node to the corresponding ingress node. In the example, a plurality of different ingress nodes may receive the BGP router advertisement message. The plurality of different ingress nodes may receive the same BGP router advertisement message or different BGP router advertisement messages. During practical application, in a case that the propagation paths are A-B-C-D, A-B-C-E and A-B-C-F, where the network ingress nodes include ingress node D, ingress node E and ingress node F, A-B-C-D, A-B-C-E and A-B-C-F are three complete paths in directions from network egress node A to corresponding ingress node D, ingress node E and ingress node F respectively, and C-D, C-E and C-F are part paths of three complete paths in directions from the network egress node to corresponding ingress node D, ingress node E and ingress node F respectively. Moreover, ingress nodes included in the part paths of the paths may not be ingress nodes in the above three complete propagation paths (that is, may be part paths composed of other ingress nodes capable of receiving the BGP routing message transmitted by the network egress node).

In the above example, Fig. 9 is a schematic diagram of propagation paths in directions from a network egress node to a plurality of different network ingress nodes according to an example of the disclosure. As shown in Fig. 9, PE3 represents a network egress node, PE1 and PE2 represent network ingress nodes, P1, P2, P3 and P4 represent different nodes from the network egress node to the network ingress node, TE path-7 and TE path-8 represent different underlying transport paths iterated from PE1 to PE3, and TE path-9 and TE path-10 represent different underlying transport paths iterated from PE2 to PE3.

In an optional example, after the step of acquiring, on a current node, a BGP router advertisement message transmitted by a previous node, the method further includes: determine, in a case that a plurality of nodes in the propagation path includes the current node, a next node after the current node in the propagation path in the information of the propagation path; and transmit, on the current node, the BGP router advertisement message to the next node. In the example, a propagation path may be preset in the field of the newly added path attribute in the BGP router advertisement message or in the field of the existing path attribute in the BGP router advertisement message. Then, when a BGP router advertisement is carried out and it is determined that the current node is a node in the propagation path, the next node after the current node in the propagation path is determined from the information of the propagation path carried in the BGP router advertisement message. The current node transmits the BGP router advertisement message to the next node. The next node is controlled to continue to carry out the BGP router advertisement.

In an optional example, the step of transmitting, on the current node, the BGP router advertisement message to the next node includes: transmit, in a case that a BGP session is configured between the current node and the next node and an address family related to the BGP router advertisement message is enabled, on the current node, the BGP router advertisement message to the next node. In the example, the BGP session operation is configured, and information is authorized to be transmitted and received between the current node and the next node such that information can be more smoothly and safely transmitted between the current node and the next node, address families related to the BGP router advertisement message can be enabled, and nodes required to carry out a BGP router advertisement and BGP route forwarding can be more accurately determined.

In an optional example, after the step of acquiring, on a current node, a BGP router advertisement message transmitted by a previous node, the method further includes: determine, in a case that a plurality of nodes in the propagation path include the current node, a next node after the current node in the propagation path in the information of the propagation path; and transmit, in a case that no BGP session is configured between the current node and the next node, but a route reflector is pre-configured to transparently transmit the BGP router advertisement message, on the current node, the BGP router advertisement message to the route reflector. In the example, the BGP router advertisement message may be transparently transmitted to the next node on the propagation path by means of a pre-configured route reflector. For instance, the propagation path is E-N-A-B-H, the BGP router advertisement message is required to be transmitted to node H, the current node is node A, and the next node adjacent to the current node is node B. Current node A determines that the BGP router advertisement message is required to be transmitted to node B on the basis of the information of the propagation path carried in the BGP router advertisement message, but no session is established between node B and node A, and communication is carried out by means of a reflector R. Then, the BGP router advertisement message is transmitted to node R on node A.

In an optional example, the step of transmitting, on the current node, the BGP router advertisement message to the next node includes: modify the BGP next-hop node in the forwarding direction indicated by the BGP router advertisement message to the current node, and obtain an updated BGP router advertisement message; and transmit, on the current node, the updated BGP router advertisement message to the next node. In the example, the current node transmits the updated BGP router advertisement message to the next node adjacent to the current node. The next node may determine, on the basis that a BGP next-hop node of the updated BGP router advertisement message, that an underlying transport path is required to be established in a forwarding direction, a destination of which is the current node, and determine, on the basis that the BGP router advertisement message, service requirements between the next node and the current node. An underlying transport path satisfying the service requirements or an optimum underlying transport path is established.

In an optional example, in a case that the BGP next-hop node in the forwarding direction indicated by the BGP router advertisement message is modified to the current node, the method further includes: generate, on the current node, a BGP-intent routing table entry, where the BGP-intent routing table entry includes information configured to represent the underlying transport path, and the information configured to represent the underlying transport path includes at least one of: a transport delay of the underlying transport path or bandwidth information of the underlying transport path. In the example, in addition to the transport delay of the underlying transport path and the bandwidth information of the underlying transport path mentioned above, the information of the underlying transport path further includes metric credit information of the underlying transport path, affinity information of the underlying transport path, etc.

In an optional example, before the step of acquiring, on a current node, a BGP router advertisement message transmitted by a previous node on, the method further includes: acquire intent information of a service, which is required to undergo communication, between the network ingress node and the network egress node, where the service which is required to undergo communication corresponds to the propagation path, and the intent information represents a total-metric from a node at one end to a node at the other end of the propagation path; and configure the information of the propagation path according to the intent information, where a sum of metrics indicated by instruction information corresponding to nodes in the information of the propagation path is equal to the total-metric, and the metric includes at least one of: a delay metric, a traffic engineering metric or an interior gateway protocol metric. In the example, in a case that an intent of a service which is required to undergo communication between the network ingress node and the network egress node is that a total delay from a node at one end to a node at the other end of a used propagation path should not exceed 100 ms, corresponding delays may be configured for nodes included in the propagation path on the basis of the intent information. A sum of the delays of all the nodes included in the propagation path is required to be equal to 100 ms. A total end-to-end delay of 100 ms may be evenly distributed to each node of the propagation path, or may not be evenly distributed (that is, corresponding delays are determined according to actual requirements between every two nodes). Moreover, in addition to the delay metrics, traffic engineering metrics, and interior gateway protocol metrics mentioned above, the metrics include bandwidth metrics, throughput metrics, etc.

In an optional example, the step of acquiring intent information of a service, which is required to undergo communication, between the network ingress node and the network egress node includes: acquire, in a case that the service which is required to undergo communication includes P services, P pieces of intent information of the P services, where P is 1 or a positive integer greater than or equal to 2, and each piece of intent information represents a total-metric from a node at one end to a node at the other end of a corresponding propagation path. The step of configuring the information of the propagation path according to the intent information includes: configure information of P propagation paths according to the P pieces of intent information, where a sum of metrics indicated by instruction information corresponding to nodes in information of each complete propagation path is equal to a total-metric represented by corresponding intent information. In the example, there may be a plurality of services, which are required to undergo communication, between the network ingress node and the network egress node. Further, information of a plurality of propagation paths may be configured according to intent information of the plurality of services. That is, the information of the propagation paths may be pre-determined, and further the BGP router advertisement is carried out according to the pre-determined information. During practical application, in a case that there are two types of services, which are required to undergo communication, between the network ingress node and the network egress node, where an intent of one type of service is that a total delay from a node at one end to a node at the other end of a used propagation path should not exceed 10 ms, and an intent of the other type of service is that a total delay from a node at one end to a node at the other end of a used propagation path should not exceed 100 ms, two different propagation paths can be configured on the basis of the two types of delay intents respectively, etc.

In an optional example, after the step of configuring information of P propagation paths according to the P pieces of intent information, the method further includes: carry the information of the P propagation paths in the BGP router advertisement message. In the example, there are several, dozens, hundreds, etc. of services, which are required to undergo communication, between the network ingress node and the network egress node, and the BGP router advertisement message carries information of the several, dozens or hundreds of propagation paths.

In an optional example, the instruction information includes at least one of: transport delay requirement information, bandwidth requirement information or path affinity requirement information. In the example, the instruction information further includes internal gateway protocol requirement information, metric credit requirement information, etc.

In an optional example, in a case that the instruction information includes the transport delay requirement information, a transport delay of the underlying transport path is less than or equal to a transport delay indicated by the transport delay requirement information. In the example, in a case that an intent of a service, which is required to undergo communication, between the network ingress node and the network egress node is that a total delay from a node at one end to a node at the other end of a used propagation path should not exceed 90 ms, and the propagation path is A-B-C-D, current node B is required to transmit the BGP router advertisement message to node C, and node C transmits the BGP router advertisement message to node D. A delay requirement in the instruction information transmitted by node B to node C is that a delay should not exceed 30 ms, that is, a delay of an underlying transport path between node C and node B is required to be less than or equal to 30 ms. That is, an underlying transport path having a transport delay of 25 ms may be established between node C and node B, an underlying transport path having a transport delay of 20 ms may also be established, etc.

Apparently, the examples mentioned above are merely some examples rather than all examples of the disclosure.

Examples of the disclosure will be described in detail below in combination with specific examples:

### Step 1: extend a protocol.

Explicit path control information is introduced into a BGP router advertisement message. The explicit path control information includes one or more propagation paths represented by lists. Each list includes a plurality of BGP speakers in order. Each BGP speaker element in the list further includes related instructions, such that the BGP router advertisement message is guided to be advertised to each BGP speaker included in these lists one by one along an expected propagation path, and a state of a BGP router is updated according to corresponding instruction information.

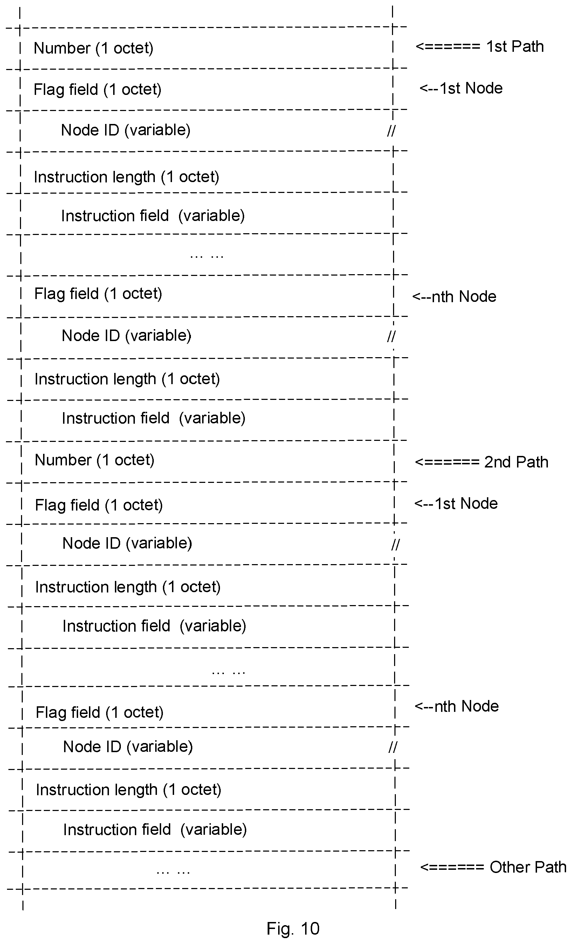

A specific extension method is as follows:
define path attributes of a BGP by RFC4271, carry the path attributes during a BGP router advertisement, and represent various attributes of a router. Fig. 10 is a schematic diagram of explicit propagation object path attributes (EPO path attributes) according to an example of the disclosure. According to the disclosure, a new explicit propagation object (EPO) attribute is introduced into a BGP protocol. The attribute includes one or more propagation paths. A type code of a corresponding path attribute = to be defined (TBD, to be assigned by an internet assigned numbers authority (IANA)) represents that the attribute value includes EPO attributes in the format shown in Fig. 10.

Fig. 10 illustrates a plurality of propagation paths. Each propagation path starts from a field of Count followed by one or more tuple<Flags, Node ID, Length of Instructions, Instructions Content>. Each tuple corresponds to a BGP speaker.

Each field is explained as follows:
Count, which occupies 1 byte, presents a number of BGP speakers included in a propagation path, and has a value of at least 1. Flags, which occupies 1 byte, is a flag bit, and currently defines two flags. One is A-Flag, which is an address family flag, and indicates an address family type of a Node ID in the tuple. In a case that A-Flag is 0, the flag represents an IPv4 address of 4 bytes. In a case that the above flag is 1, the flag represents an IPv6 address of 16 bytes. The other one is I-Flag, which is an instruction flag, and indicates whether the tuple includes instructions information, 0 represents exclusion, and 1 represents inclusion. It is to be noted that if I-Flag is 0, no subsequent Length of Instructions field and Instructions Content exist. Node ID, which represents node identity information of the BGP speaker, and a number of bytes occupied by a field of Node ID is determined by A-Flag before the field. In a case that A-Flag is 0, Node ID is an IPv4 address of 4 bytes. In a case that A-Flag is 1, Node ID is an IPv6 address of 16 bytes. Length of Instructions, which occupies 1 byte, and represents a number of bytes of Instructions content included in the tuple. Instructions Content includes a specific instruction. A number of bytes occupied by a field of Instructions Content is determined by a Length of Instructions before the field. The field may include one or more instructions. Each instruction is represented by tuple <IT, IV>, where IT represents an instruction type, and IV represents an instruction value. It is to be noted that a particular IT implies a length of a corresponding IV.

The disclosure may define IT types as follows:
IT=0, which represents a reserved value. In this case, an IV field has a length of 08. IT=1, which represents Metric Credit. In this case, an IV field is a metric credit value of 3 bytes. A unit depends on a Metric Type (that is, an AIGP attribute) of a BGP router. For instance, the Metric Type is a delay class, and a unit is microsecond (us). Other values are not defined in examples of the disclosure.

It can be seen from the foregoing that the above expansion method is only the optimum method proposed in the disclosure. During practical application, other expansion methods may also be used. For instance, information supporting an EPO or similar EPO may be expanded in other defined BGP path attributes.

It should also be noted that the propagation path included in the EPO attributes refers to a path in a direction from the network egress to the network ingress, reflects a forwarding path of a router advertisement in a control plane, and is just opposite the BGP forwarding path formed in a data plane. The EPO attribute may include one or more propagation paths which may point to the same network ingress node or different network entry nodes. Some propagation paths included in the EPO attribute may be complete. That is, a first node in the propagation path from beginning to end is the network egress node, and a last node is the network ingress node. Some propagation paths may be only any part paths of the complete propagation paths. The EPO attribute may include only incomplete propagation paths. The propagation path included in the EPO attribute only provides a reference for a BGP router advertisement, and a BGP forwarding path finally generated still obeys BGP router preference rules. That is, the BGP forwarding path generated is not certainly a propagation path (assumed as a complete propagation path) in an opposite direction. For instance, when egress PE node E (network egress node) locally generates a BGP router which is expected to be advertised to ingress PE node I (network ingress node) along expected single propagation path E-D-C-B-A-I, the EPO may include single propagation path E-D-C-B-A-I, which means that node E will advertise the BGP router to node D. Node D learns the router to advertise node C. Node C learns the router to advertise node B, and so on until node I learns the router. Moreover, in the EPO attribute included in the BGP router advertisement generated from node E, a plurality of concurrent propagation paths are legal.
Propagation path 1: E-D-C-B-A-I1, which is a complete propagation path pointing to Ingress PE node I1 (network ingress node).
Propagation path 2: E-Q-P-O-I2, which is a complete propagation path pointing to Ingress PE node I2 (network ingress node).
Propagation path 3: E-T-S-R-I3, which is a complete propagation path pointing to Ingress PE node I3 (network ingress node).
Propagation path 4: D-C2-B, which is a small segment of propagation path of a complete propagation path.
Propagation path 5: Q-P2-O, which is a segment of propagation path of a complete propagation path.
Propagation path 6: T-S2-R, which is a segment of propagation path of a complete propagation path.
Propagation path 7: Z-Y-X, which is a segment of propagation path of a complete propagation path.

### Step 2: process behaviors.

In a case that a router advertisement received by a BGP speaker from a neighbor includes an EPO attribute, the speaker reads all propagation paths from an EPO and then implements enhanced actions for processing behaviors as follows:

### a) Process next-hop iteration.

Compared with a traditional next-hop iteration behavior, how to implement the next-hop iteration is guided according to an instruction included in the EPO in the disclosure. Specifically, whether a Node ID of a BGP next-hop (or referred to as a BGP next-hop address) in a router advertisement and a Node ID of the BGP speaker appear adjacent to each other in sequence is checked in all propagation paths included in the EPO. If so, instructions associated with the Node ID of the BGP Speaker are acquired from the propagation path, and information included in the Instructions is used for the next-hop iteration. For instance, in a case that the BGP Speaker is node A (network ingress node), a BGP Next-hop in a received router advertisement is node N (network egress node). In a case that one of the propagation paths included in the EPO is E-... - N-A-B-...- H, since N and A adjacent to each other appear in sequence in the propagation path, the BGP Speaker (that is, node A) acquires Instructions associated with node A from the propagation path. For instance, Instructions includes <IT,IV> of a Metric Credit type. When node A implements next-hop iteration for the router, an underlying forwarding path to next-hop node N which satisfies Metric Credit value requirements is obtained through iteration according to corresponding Metric Credit values.

### b) Continue to advertise the router to an upstream neighbor.

Compared with a traditional behavior of continuing to advertise a router to an upstream neighbor (the traditional behavior is to determine whether to continue to advertise a router to neighbors mainly according to which neighbors the BGP Speaker configures BGP sessions (or referred to as BG connections) and enables required address families with, or in combination with a local policy), the example of the disclosure has an added behavior of further controlling to continue to advertise a router to upstream neighbors according to propagation paths included in an EPO. Specifically, in all propagation paths included in the EPO, whether the Node ID of the BGP Speaker appears is checked. If so, a next adjacent node is acquired from the propagation path, and the router is continued to be advised to the next node. Certainly, the premise is that a BGP session is configured between the node and the next node and a required address family is enabled. However, the check of the condition is not applicable to a scenario in which the neighbor is a reflector. For instance, in a case that the BGP Speaker is node A (network egress node), a BGP Next-hop in the received router advertisement is node N (network ingress node), and one of the propagation paths included in the EPO is E-... - N-A-B-...- H, since A appears in the propagation path, next adjacent node B (network ingress node) is acquired, and the routed will be continued to be advertised to node B. Assuming that another propagation path segment A-C-... - D is further included, next adjacent node C (network ingress node) will be acquired, and the router will be continued to be advertised to node C.

### Example 1: A router advertisement carries a single propagation path.

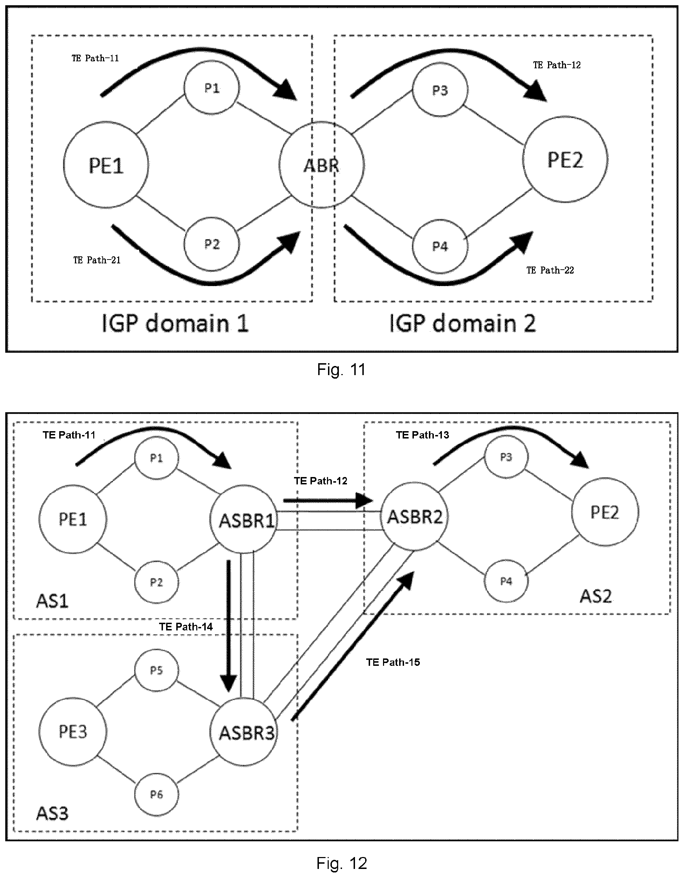

Fig. 11 is a schematic diagram of homologous and homoclinic transport paths having different intents according to an example of the disclosure. As shown in Fig. 11, the network includes two interior gateway protocols (IGP) domains, BGP neighbors are established between PE1 and an area border router (ABR), and ABR and PE2, and a BGP-intent router is advertised. For instance, according to a method described in draft-zhou-idr-inter-domain-lcu-04, Egress PE2 (network egress node) advises a loopback router (that is, a local loopback router, denoted as loopback-PE2) to the ABR (network ingress node) by means of the BGP. The router advertisement carries color extended community to carry intent information.

It is assumed that in the example, there are two types of services, which are required to undergo communication, between Ingress PE1 and Egress PE2. One type of service has an intent that a total end-to-end delay of a used transport path should not exceed 10 ms, and the other type of service has an intent that a total end-to-end delay of a used transport path should not exceed 100 ms. Since it is required to represent two intent-related paths between the same source/destination, in the example, two colors (indicators) are required to be configured on Egress PE2, and are denoted as color-1000 and color-2000.

An intent configuration corresponding to Color-1000 is as follows:
metric-type: unidirectional link delay (ms)
total-metric: 10

An intent configuration corresponding to Color-2000 is as follows:
metric-type: unidirectional link delay (ms)
total-metric: 100

The intent configuration information corresponding to the two above colors is also evenly configured on other BGP Speaker nodes (such as an area border router (ABR) and Ingress PE1). It should also be noted that after receiving BGP-intent routing advertisements from downstream BGP Speaker neighbors, the other BGP Speakers do not compute transport paths to the downstream BGP Speaker neighbors only according to a total-metric included in the intent configuration information, but acquire metric credit information from the received BGP-intent routing advertisements, and accordingly establish or use existing transport paths satisfying intents.

### 1) Egress PE2 generates BGP-intent routers and advertises same to upstream neighbors

Two BGP-intent routers prefix=loopback-PE2, color=1000> and prefix=loopback-PE2, color=2000> are correspondingly generated on Egress PE2. Expected propagation paths of the two routers are PE2 (network egress node)-ABR-PE1 (network ingress node).

An advertisement of BGP-intent router <prefix=loopback-PE2, color=1000> may include attribute information (including an EPO) as follows:
metric-type is set as a unidirectional link delay;
an initial metric is set as 0;

EPO information is set as follows:
Count: 3 (Note: a first propagation path includes 3 nodes);
Flags: A-Flag=0, I-Flag=0 (Note: the first Node ID is an IPv4 address, has no associated Instructions);
Node ID: PE2;
Flags: A-Flag=0, I-Flag=1 (Note: the second Node ID is an IPv4 address, and has associated Instructions);
Node ID: ABR;
Instructions Content: <IT=Metric Credit, IV=5000 us>;
Flags: A-Flag=0, I-Flag=1 (Note: the third Node ID is an IPv4 address, and has associated Instructions);
Node ID: PE1;
Instructions Content: <IT=Metric Credit, IV=5000 us>.

That is, a total end-to-end delay of 10 ms is evenly divided on each segment of the path. Certainly, other values may be explicitly specified.

Similarly, an advertisement of BGP-intent router <prefix=loopback-PE2, color=2000> may include attribute information (including an EPO) as follows:
metric-type is set as a unidirectional link delay;
an initial metric is set as 0;

EPO information is set as follows:
Count: 3 (Note: a first propagation path includes 3 nodes);
Flags: A-Flag=0, I-Flag=0 (Note: the first Node ID is an IPv4 address, has no associated Instructions);
Node ID: PE2;
Flags: A-Flag=0, I-Flag=1 (Note: the second Node ID is an IPv4 address, and has associated Instructions);
Node ID: ABR;
Instructions Content: <IT=Metric Credit, IV=50000 us>;
Flags: A-Flag=0, I-Flag=1 (Note: the third Node ID is an IPv4 address, and has associated Instructions);
Node ID: PE1;
Instructions Content: <IT=Metric Credit, IV=50000 us>.

Then, the above two intent routers are both advertised to a next node ABR according to instructions of the EPO.

2) An ABR receives a BGP-intent router, establishes an underlying transport path, which satisfies an intent, to a BGP Next-hop.

When the ABR (network ingress node) receives BGP-intent router <prefix=loopback-PE2, color=1000>, corresponding routing table entries are locally generated. A metric-type is a unidirectional link delay, and a BGP Next-hop is Egress PE2 (network egress node). The ABR determines, according to EPO information included in the received router advertisement, that a Metric Credit from the BGP Speaker (that is, the ABR) to a downstream BGP Speaker neighbor (that is, Egress PE2) is 5 ms, and the ABR node internally calls a constraint shortest path first (CSPF) computation module to compute an extremely low delay path, which does not exceed 5 ms, to Egress PE2. Assuming that the path is TE path-12 in Fig. 11, a delay is 4 ms. Therefore, an underlying transport path iterated from BGP-intent routing table entry <prefix=loopback-PE2, color=1000> to a BGP Next-hop and generated on the ABR is TE path-12, and a metric in the routing table entry is accordingly set as 4. The ABR continues to advertise the BGP-intent router to next node PE1 according to an indication of the propagation path in the EPO. A metric-type is a unidirectional link delay, a metric is 4, and a BGP Next-hop is modified to an ABR, and EPO information (unchanged from EPO information in a previously received router advertisement).

Similarly, when the ABR (network ingress node) receives a BGP-intent router <prefix=loopback-PE2, color=2000>, corresponding routing table entries are locally generated. A metric-type is a unidirectional link delay, and a BGP Next-hop is Egress PE2 (network egress node). The ABR determines, according to EPO information included in the received router advertisement, that a Metric Credit from the BGP Speaker (that is, the ABR) to a downstream BGP Speaker neighbor (that is, Egress PE2) is 50 ms, and the ABR node internally calls a CSPF computation module to compute a low delay path, which does not exceed 50 ms, to Egress PE2. Assuming that the path is TE path-22 in Fig. 11, a delay is 40 ms. Therefore, an underlying transport path iterated from BGP-intent routing table entry <prefix=loopback-PE2, color=2000> to a BGP Next-hop and generated on the ABR is TE path-22, and a metric in the routing table entry is accordingly set as 40. The ABR continues to advertise the BGP-intent router to next node PE1 according to an indication of the propagation path in the EPO. A metric-type is a unidirectional link delay, a metric is 40, and a BGP Next-hop is modified to an ABR, and EPO information (unchanged from EPO information in a previously received router advertisement).

3) Ingress PE1 receives a BGP-intent router and establishes an underlying transport path, which satisfies an intent, to a BGP Next-hop.

When Ingress PE1 (network ingress node) receives BGP-intent router <prefix=loopback-PE2, color=1000>, corresponding routing table entries are locally generated. A metric-type is a unidirectional link delay, and a BGP Next-hop is an ABR (network egress node). Ingress PE1 determines, according to EPO information included in the received router advertisement, that the Metric Credit from the BGP Speaker (that is, Ingress PE1) to an downstream BGP Speaker neighbor (that is, an ABR) is 5 ms, and an Ingress PE1 node internally calls a CSPF computation module to compute an extremely low delay path, which does not exceed 5 ms, to the ABR. Assuming that the path is TE path-11 in Fig. 11, a delay is 4 ms. Therefore, an underlying transport path iterated from BGP-intent routing table entry <prefix=loopback-PE2, color=1000> to a BGP Next-hop and generated on Ingress PE1 is TE path-11, and a metric in the routing table entry is accordingly set as 8 (=4+4).

Similarly, when Ingress PE1 (network ingress node) receives BGP-intent router <prefix=loopback-PE2, color=2000>, corresponding routing table entries are locally generated. A metric-type is a unidirectional link delay, and a BGP Next-hop is an ABR (network egress node). Ingress PE1 determines, according to EPO information included in the received router advertisement, that the Metric Credit from the BGP Speaker (that is, Ingress PE1) to an downstream BGP Speaker neighbor (that is, an ABR) is 50 ms, and an Ingress PE1 node internally calls a CSPF computation module to compute a low delay path, which does not exceed 50 ms, to the ABR. Assuming that the path is TE path-21 in Fig. 11, a delay is 40 ms. Therefore, an underlying transport path iterated from BGP-intent routing table entry <prefix=loopback-PE2, color=2000> to a BGP Next-hop and generated on Ingress PE1 is TE path-21, and a metric in the routing table entry is accordingly set as 80 (=40+40).

It can be seen from the foregoing that in the example, differentiated transport paths can be established on each BGP Speaker according to EPO information included in the router advertisement. The situation that all BGP Speakers compete for high-quality extremely-low delay link resources can be effectively avoided.

### Example: 2 A router advertisement carries a plurality of propagation paths to the same Ingress PE.

Fig. 12 is a schematic diagram showing that a router advertisement carries a plurality of propagation paths to the same Ingress PE according to an example of the disclosure. The network shown in Fig. 12 includes three autonomous systems (ASs). BGP neighbors are established between PE1 and autonomous system boundary router (ASBR) 1, between ASBR1 and ASBR2, between ASBR 1 and ASBR 3, between ASBR2 and PE2, between ASBR 3 and PE3, and BGP-intent routers are advertised. For instance, according to a method described in draft-zhou-idr-inter-domain-lcu-04, Egress PE2 (network egress node) advises a loopback router (denoted as loopback-PE2) to ASBR2 (network ingress node) by means of the BGP. The router advertisement carries color extended community to carry intent information.

Assuming that in the instance, an intent of a service, which is required to undergo communication, between Ingress PE1 and Egress PE2 is that a total end-to-end delay of a used transport path should not exceed 100 ms. It is assumed that a color configured for the intent on Egress PE2 is color-1000.

An intent configuration corresponding to Color-1000 is as follows:
metric-type: unidirectional link delay (ms)
total-metric: 100

The intent configuration information corresponding to the above color is also evenly configured on other BGP Speaker nodes (such as ASBR1/2/3 and PE1). It should also be noted that after receiving BGP-intent routing advertisements from downstream BGP Speaker neighbors, the other BGP Speakers do not compute transport paths to the downstream BGP Speaker neighbors only according to a total-metric included in the intent configuration information, but acquire metric credit information from the received BGP-intent routing advertisements, and accordingly establish or use existing transport paths satisfying intents.

### 1) Egress PE2 generates BGP-intent routers and advertises same to upstream neighbors

BGP-intent router <prefix=loopback-PE2, color=1000> is correspondingly generated on Egress PE2. Expected propagation paths of the router are PE2 (network egress node)-ASBR2-ASBR1-PE1 (network ingress node) and ASBR2 (network egress node)-ASBR3-ASBR1 (network ingress node).

An Advertisement of BGP-intent router <prefix=loopback-PE2, color=1000> may include attribute information (including an EPO) as follows:
metric-type is set as a unidirectional link delay;
an initial metric is set as 0;

EPO information is set as follows:
Count: 4 (Note: a first propagation path includes 4 nodes);
Flags: A-Flag=0, I-Flag=0 (Note: the first Node ID is an IPv4 address, has no associated Instructions);
Node ID: PE2;
Flags: A-Flag=0, I-Flag=1 (Note: the second Node ID is an IPv4 address, and has associated Instructions);
Node ID: ASBR2;
Instructions Content: <IT=Metric Credit, IV=40000 us>;
Flags: A-Flag=0, I-Flag=1 (Note: the third Node ID is an IPv4 address, and has associated Instructions);
Node ID: ASBR1;
Instructions Content: <IT=Metric Credit, IV=20000 us>
Flags: A-Flag=0, I-Flag=1 (Note: the fourth Node ID is an IPv4 address, and has associated Instructions);
Node ID: PE1;
Instructions Content: <IT=Metric Credit, IV=40000 us>;
Count: 3 (Note: a second propagation path includes 3 nodes);
Flags: A-Flag=0, I-Flag=0 (Note: the first Node ID is an IPv4 address, has no associated Instructions);
Node ID: ASBR2;
Flags: A-Flag=0, I-Flag=1 (Note: the second Node ID is an IPv4 address, and has associated Instructions);
Node ID: ASBR3;
Instructions Content: <IT=Metric Credit, IV=10000 us>;
Flags: A-Flag=0, I-Flag=1 (Note: the third Node ID is an IPv4 address, and has associated Instructions);
Node ID: ASBR1;
Instructions Content: <IT=Metric Credit, IV=10000 us>;

That is, Metric Credits are assigned as 40 ms, 20 ms and 40 ms hop by hop on first propagation path PE2-ASBR2-ASBR1-PE1, and Metric Credits are assigned as 10 ms and 10 ms hop by hop on second propagation path ASBR2-ASBR3-ASBR1. The above intent router is advertised to next node ASBR2 according to an instruction of the EPO.

2) ASBR2 receives a BGP-intent router and establishes an underlying transport path, which satisfies an intent, to a BGP Next-hop.

When ASBR2 receives BGP-intent router <prefix=loopback-PE2, color=1000>, corresponding routing table entries are locally generated. A metric-type is a unidirectional link delay, and a BGP Next-hop is Egress PE2. ASBR2 determines, according to EPO information included in the received router advertisement, that a Metric Credit from the BGP Speaker (that is, ASBR2) to a downstream BGP Speaker neighbor (that is, PE2) is 40 ms, and the ASBR2 node internally calls a constraint shortest path first (CSPF) computation module to compute a low delay path, which does not exceed 40 ms, to Egress PE2. Assuming that the path is TE path-13 in Fig. 12, a delay is 40 ms. Therefore, an underlying transport path iterated from BGP-intent routing table entry <prefix=loopback-PE2, color=1000> to a BGP Next-hop and generated on ASBR2 is TE path-13, and a metric in the routing table entry is accordingly set as 40. ASBR2 continues to advertise the BGP-intent router to next nodes ASBR1 and ASBR3 according to an indication of the propagation path in the EPO. A metric-type is a unidirectional link delay, a metric is 40, and a BGP Next-hop is modified to ASBR2, and EPO information (unchanged from EPO information in a previously received router advertisement).

3) ASBR1/3 receives a BGP-intent router and establishes an underlying transport path, which satisfies an intent, to a BGP Next-hop.

When ASBR1 receives BGP-intent router <prefix=loopback-PE2, color=1000> from ASBR2, corresponding routing table entries are locally generated. A metric-type is a unidirectional link delay, and a BGP Next-hop is ASBR2. ASBR1 determines, according to EPO information included in the received router advertisement, that a Metric Credit from the BGP Speaker (that is, ASBR1) to a downstream BGP Speaker neighbor (that is, ASBR2) is 20 ms, and the ASBR1 node internally calls a constraint shortest path first (CSPF) computation module to compute a low delay path, which does not exceed 20 ms, to ASBR2. Assuming that the path is **TE** path-12 in Fig. 12, a delay is 20 ms. Therefore, an underlying transport path iterated from BGP-intent routing table entry <prefix=loopback-PE2, color=1000> to a BGP Next-hop and generated on ASBR1 is **TE** path-12, and a metric in the routing table entry is accordingly set as 60. ASBR1 continues to advertise the BGP-intent router to next node PE1 according to an indication of the propagation path in the EPO. A metric-type is a unidirectional link delay, a metric is 60, and a BGP Next-hop is modified to ASBR1, and EPO information (unchanged from EPO information in a previously received router advertisement).

Moreover, ASBR1 also receives BGP-intent router <prefix=loopback-PE2, color=1000> from ASBR3, and a corresponding routing table entry is similarly generated, which can form an equal cost multi-path (ECMP) or fast re-routing (FRR) with the previously generated table entry. The differences from the above processing are that the metric credit acquired from the EPO is 10 ms, and the underlying transport path of iteration is TE-path-14, which will not be repeated.

Similarly, ASBR3 will receive BGP-intent router <prefix=loopback-PE2, color=1000> from ASBR2, and a corresponding routing table entry will be generated similarly. **The** difference from the above processing lie in that the metric credit acquired from the EPO is 10 ms, and the underlying transport path of iteration is TE-path-15. ASBR3 continues to advertise the BGP-intent router to next node ASBR1 according to an indication of the propagation path in the EPO. A metric-type is a unidirectional link delay, a metric is 50, and a BGP Next-hop is modified to ASBR3, and EPO information (unchanged from EPO information in a previously received router advertisement).

4) Ingress PE1 receives a BGP-intent router and establishes an underlying transport path, which satisfies an intent, to a BGP Next-hop.

When Ingress PE1 receives BGP-intent router <prefix=loopback-PE2, color=1000>, corresponding routing table entries are locally generated. A metric-type is a unidirectional link delay, and a BGP Next-hop is ASBR1. Ingress PE1 determines, according to EPO information included in the received router advertisement, that a Metric Credit from the BGP Speaker (that is, Ingress PE1) to an downstream BGP Speaker neighbor (that is, ASBR1) is 40 ms, and an Ingress PE1 node internally calls a CSPF computation module to compute an extremely low delay path, which does not exceed 40 ms, to the ABR. Assuming that the path is TE path-11 in Fig. 12, a delay is 40 ms. Therefore, an underlying transport path iterated from BGP-intent routing table entry <prefix=loopback-PE2, color=1000> to a BGP Next-hop and generated on Ingress PE1 is TE path-11, and a metric in the routing table entry is accordingly set as 100.

Example 3: A router advertisement carries a plurality of propagation paths to different ingress PEs.

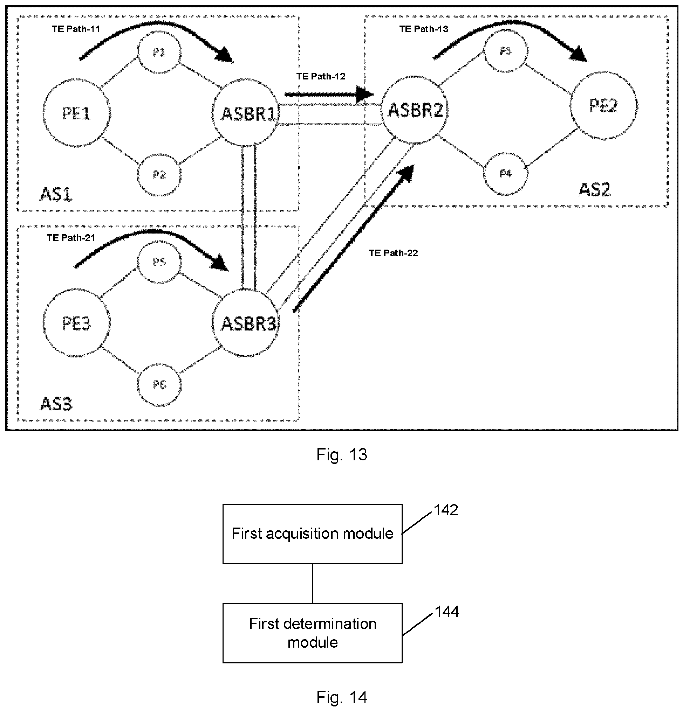

Fig. 13 is a schematic diagram showing that a router advertisement carries a plurality of propagation paths to different Ingress PEs according to an example of the disclosure. The network shown in Fig. 13 includes three ASs. BGP neighbors are established between PE1 and ASBR1, between ASBR1 and ASBR2, between ASBR1 and ASBR3, between ASBR2 and PE2, and between ASBR3 and PE3, and BGP-intent routers are advertised. For instance, according to the method described in draft-zhou-idr-inter-domain-lcu-04, Egress PE2 (network ingress node) advertises a loopback router (denoted as loopback-PE2) to ASBR2 (network egress node) by means of a BGP, and the router advertisement carries color extended community to carry intent information.

Assuming that in the example intents of services, which are required to undergo communication, between Ingress PE1 and Egress PE2 and between Ingress PE3 and Egress PE2 are that a total end-to-end delay of a used transport path should not exceed 100 ms. It is assumed that a color configured for the intent on Egress PE2 is color-1000.

An intent configuration corresponding to Color-1000 is as follows:
metric-type: unidirectional link delay (ms)
total-metric: 100

The intent configuration information corresponding to the above color is also evenly configured on other BGP Speaker nodes (such as ASBR1/2/3 and PE1/3). It should also be noted that after receiving BGP-intent routing advertisements from downstream BGP Speaker neighbors, the other BGP Speakers do not compute transport paths to the downstream BGP Speaker neighbors only according to a total-metric included in the intent configuration information, but acquire metric credit information from the received BGP-intent routing advertisements, and accordingly establish or use existing transport paths satisfying intents.

BGP-intent router <prefix=loopback-PE2, color=1000> is correspondingly generated on Egress PE2. Expected propagation paths of the router are PE2 (network egress node)-ASBR2-ASBR1-PE1 (network ingress node) and ASBR2 (network egress node)-ASBR3-PE3 (network ingress node). Compared with Example 2, except that propagation paths have slight differences, other processing flows are completely similar. The figure shows an underlying traffic engineering path (TE path) iterated by a BGP router in each AS according to metric credits, which will not be repeated.

Through the descriptions in the above embodiments, those skilled in the art would clearly know that methods according to the above examples may be implemented by means of software plus a necessary general-purpose hardware platform, and certainly may also be implemented by means of hardware, but in many situations the former is a better embodiment. On the basis of such understanding, the technical solutions of examples of the disclosure, in essence or from the view of part contributing to the prior art, may be embodied in the form of a software product. The computer software product is stored in a storage medium (such as a read-only memory (ROM)/random access memory (RAM), a magnetic disk and an optical disk), and includes several instructions configured to enable a terminal device (which may be a mobile phone, a computer, a server, a network apparatus, etc.) to execute the methods in examples of the disclosure.

In the example, an apparatus for processing a router advertisement message is further provided. The apparatus is configured to implement the above examples and preferred embodiments, and the described content will not be repeated. The term "module", as used below, may implement a combination of software and/or hardware having pre-determined functions. Although the apparatus described in the following examples is preferably implemented by software, implementation by hardware or a combination of software and hardware is also possible and conceivable.

Fig. 14 is a structural block diagram of an apparatus for processing a router advertisement message according to an example of the disclosure. As shown in Fig. 14, the apparatus includes:
a first acquisition module 142 configured to acquire, on a current node, a border gateway protocol (BGP) router advertisement message transmitted by a previous node, where the BGP router advertisement message carries information of a propagation path, the propagation path is a path in a direction from a network egress node to a network ingress node, the BGP router advertisement message indicates a BGP next-hop node in a forwarding direction, and the forwarding direction is a direction from the network ingress node to the network egress node; and
a first determination module 144 configured to determine, in a case that the BGP next-hop node and the current node are two adjacent nodes on the propagation path, an underlying transport path from the current node to the BGP next-hop node according to instruction information corresponding to the current node of the information of the propagation path.

In an optional example, the information of the propagation path is located in a field of a newly added path attribute in the BGP router advertisement message, or in a field of an existing path attribute in the BGP router advertisement message.

In an optional example, the information of the propagation path carried in the BGP router advertisement message includes a node number field configured to represent number N of nodes on the propagation path, where N is a positive integer greater than or equal to 1; N node identity fields each configured to represent an identity of a corresponding node on the propagation path; and M instruction fields each configured to represent instruction information corresponding to a corresponding node on the propagation path, where M is a positive integer greater than or equal to 1 and less than or equal to N.

In an optional example, the information of the propagation path carried in the BGP router advertisement message further includes: N flag fields each configured to represent address information of a corresponding node on the propagation path and represent whether the corresponding node on the propagation path has the instruction field.

In an optional example, the information of the propagation path carried in the BGP router advertisement message further includes: M instruction length fields each configured to represent a byte number of a corresponding instruction field of the M instruction fields. The N flag fields are further each configured to indicate whether a corresponding node on the propagation path has the instruction length field.

In an optional example, the propagation path includes one or more paths in the direction from the network egress node to the network ingress node. Each path is the path from the network egress node to the network ingress node or a part path of the path from the network egress node to the network ingress node.

In an optional example, in a case that the network egress node includes a plurality of different egress nodes, the propagation path includes a plurality of paths in directions from the plurality of different egress nodes to the network ingress node. Each path is a path from a corresponding egress node to the network ingress node or a part path of the path from the corresponding egress node to the network ingress node.

In an optional example, in a case that the network ingress node includes a plurality of different ingress nodes, the propagation path includes a plurality of paths in directions from the network egress node to the plurality of different ingress nodes. Each path is a path from the network egress node to a corresponding ingress node or a part path of the path from the network egress node to the corresponding ingress node.

In an optional example, the above apparatus further includes:
a second determination module configured to determine, after a BGP router advertisement message transmitted by a previous node is acquired on a current node and in a case that a plurality of nodes in the propagation path include the current node, a next node after the current node in the propagation path in the information of the propagation path; and
a first transmission module configured to transmit, on the current node, the BGP router advertisement message to the next node.

In an optional example, the above first transmission module includes:
a first transmission unit configured to transmit, in a case that a BGP session is configured between the current node and the next node and an address family related to the BGP router advertisement message is enabled, on the current node, the BGP router advertisement message to the next node.

In an optional example, the above apparatus further includes:
a third determination module configured to determine, after a BGP router advertisement message transmitted by a previous node is acquired on a current node and in a case that a plurality of nodes in the propagation path include the current node, a next node after the current node in the propagation path in the information of the propagation path; and
a second transmission module configured to transmit, in a case that no BGP session is configured between the current node and the next node, but a route reflector is pre-configured to transparently transmit the BGP router advertisement message, the BGP router advertisement message on the current node to the route reflector.

In an optional example, the above first transmission module further includes:
a processing unit configured to modify the BGP next-hop node in the forwarding direction indicated by the BGP router advertisement message to the current node, and obtain an updated BGP router advertisement message; and
a second transmission unit configured to transmit, on the current node, the updated BGP router advertisement message to the next node.

In an optional example, the above apparatus further includes:
a generation module configured to generate, in a case that the BGP next-hop node in the forwarding direction indicated by the BGP router advertisement message is modified to the current node, generate, on the current node, a BGP-intent routing table entry, where the BGP-intent routing table entry includes information configured to represent the underlying transport path, and the information configured to represent the underlying transport path includes at least one of: a transport delay of the underlying transport path or bandwidth information of the underlying transport path.

In an optional example, the above apparatus further includes:
a second acquisition module configured to acquire, before a BGP router advertisement message transmitted by a previous node is acquired on a current node, intent information of a service, which is required to undergo communication, between the network ingress node and the network egress node, where the service which is required to undergo communication corresponds to the propagation path, and the intent information represents a total-metric from a node at one end to a node at the other end of the propagation path; and
a configuration module configure to configure the information of the propagation path according to the intent information, where a sum of metrics indicated by instruction information corresponding to nodes in the information of the propagation path is equal to the total-metric, and the metric includes at least one of: a delay metric, a traffic engineering metric or an interior gateway protocol metric.

In an optional example, the above second acquisition module includes an acquisition unit configured to acquire, in a case that the service which is required to undergo communication includes P services, P pieces of intent information of the P services, where P is 1 or a positive integer greater than or equal to 2, and each piece of intent information represents a total-metric from a node at one end to a node at the other end of a corresponding propagation path. The above configuration module includes a configuration unit configured to configure information of P propagation paths according to the P pieces of intent information, where a sum of metrics indicated by instruction information corresponding to nodes in information of each complete propagation path is equal to a total-metric represented by corresponding intent information.

In an optional example, the above apparatus further includes:
a processing module configured to carry, after information of P propagation paths is configured according to the P pieces of intent information, the information of the P propagation paths in the BGP router advertisement message.

In an optional example, the above instruction information includes at least one of: transport delay requirement information, bandwidth requirement information or path affinity requirement information.

In an optional example, in a case that the instruction information includes the transport delay requirement information, a transport delay of the underlying transport path is less than or equal to a transport delay indicated by the transport delay requirement information.

It should be noted that the above various modules may be implemented by software or hardware. In the latter case, the above modules are located in the same processor or in different processors respectively in any combination forms, which is non-limitative.

An example of the disclosure further provides a computer-readable storage medium. The computer-readable storage medium stores a computer program. The computer program is configured to execute steps in any one of the above method examples when running.

In an example, the above computer-readable storage medium may include but is not limited to a universal serial bus flash disk, a read-only memory (ROM), a random access memory (RAM), a removable hard disk, a magnetic disk or an optical disk, and other various media that can store computer programs.

An example of the disclosure further provides an electronic apparatus. The electronic apparatus includes a memory and a processor. The memory stores a computer program. The processor is configured to run the computer program to execute steps in any one of the above method examples.

In an example, the above electronic apparatus may further include a transport device and an input/output device. The transport device is connected to the above processor. The input/output device is connected to the above processor.

For specific instances in the example, reference may be made to instances described in the above examples and illustrative embodiments, which will not be repeated herein.

According to the method for processing router advertisement message provided in an example of the disclosure, a newly added path attribute EPO may be carried in the BGP router advertisement message, and a propagation path of a router advertisement is specified, such that a prototype of BGP traffic engineering is provided to a certain extent. Moreover, instruction information is carried in the EPO to provide auxiliary information for router iteration and state maintenance of the BGP on each hop. Subsequently, different types of requirements may be introduced into the instruction information in real time, such as delay requirements, bandwidth requirements and path affinity requirements. The EPO attributes defined in examples of the disclosure are applicable to not only BGP-intent routers in the above examples, but also any known BGP router types.

Apparently, those skilled in the art should understand that all modules or steps in the above examples of the disclosure can be implemented by means of a general-purpose computation apparatus. The modules or steps can be centralized on a single computation apparatus or distributed on a network composed of a plurality of computation apparatuses. The modules or steps can be implemented by means of program codes executable by the computation apparatus, and therefore can be stored in a storage apparatus to be executed by the computation apparatus. In some situations, the steps shown or described may be executed in an order different from those herein. Optionally, the modules or steps are fabricated separately as individual integrated circuit modules, or a plurality of modules or steps are fabricated as a single integrated circuit module to be implemented. Thus, examples of the disclosure are not limited to any particular combination of hardware and software.

The above examples are merely preferred examples of the disclosure and are not intended to limit examples of the disclosure. For those skilled in the art, the examples of the disclosure can be variously modified and changed. Any modifications, equivalent substitutions, improvements, etc. made within the principles of examples of the disclosure should fall within the scope of protection of the examples of the disclosure.

## Claims

1. A method for processing a router advertisement message, comprising:
acquiring, on a current node, a border gateway protocol (BGP) router advertisement message transmitted by a previous node, wherein the BGP router advertisement message carries information of a propagation path, the propagation path is a path in a direction from a network egress node to a network ingress node, the BGP router advertisement message indicates a BGP next-hop node in a forwarding direction, and the forwarding direction is a direction from the network ingress node to the network egress node; and
determining, in a case that the BGP next-hop node and the current node are two adjacent nodes on the propagation path, an underlying transport path from the current node to the BGP next-hop node according to instruction information corresponding to the current node of the information of the propagation path.

2. The method according to claim 1, wherein the information of the propagation path is located in a field of a newly added path attribute in the BGP router advertisement message, or in a field of an existing path attribute in the BGP router advertisement message.

3. The method according to claim 1, wherein the information of the propagation path carried in the BGP router advertisement message comprises:
a node number field configured to represent number N of nodes on the propagation path, wherein N is a positive integer greater than or equal to 1;
N node identity fields each configured to represent an identity of a corresponding node on the propagation path; and
M instruction fields each configured to represent instruction information corresponding to a corresponding node on the propagation path, wherein M is a positive integer greater than or equal to 1 and less than or equal to N.

4. The method according to claim 3, wherein the information of the propagation path carried in the BGP router advertisement message further comprises:
N flag fields each configured to represent address information of a corresponding node on the propagation path and represent whether the corresponding node on the propagation path has the instruction field.

5. The method according to claim 4, wherein the information of the propagation path carried in the BGP router advertisement message further comprises:
M instruction length fields each configured to represent a byte number of a corresponding instruction field of the M instruction fields; wherein
the N flag fields are further each configured to indicate whether a corresponding node on the propagation path has the instruction length field.

6. The method according to any one of claims 1-5, wherein the propagation path comprises one or more paths in the direction from the network egress node to the network ingress node, and each path is the path from the network egress node to the network ingress node or a part path of the path from the network egress node to the network ingress node.

7. The method according to any one of claims 1-5, wherein in a case that the network egress node comprises a plurality of different egress nodes, the propagation path comprises a plurality of paths in directions from the plurality of different egress nodes to the network ingress node, and each path is a path from a corresponding egress node to the network ingress node or a part path of the path from the corresponding egress node to the network ingress node.

8. The method according to any one of claims 1-5, wherein in a case that the network ingress node comprises a plurality of different ingress nodes, the propagation path comprises a plurality of paths in directions from the network egress node to the plurality of different ingress nodes, and each path is a path from the network egress node to a corresponding ingress node or a part path of the path from the network egress node to the corresponding ingress node.

9. The method according to any one of claims 1-5, after acquiring, on a current node, a BGP router advertisement message transmitted by a previous node, the method further comprises:
determining, in a case that a plurality of nodes in the propagation path comprise the current node, a next node after the current node in the propagation path in the information of the propagation path; and
transmitting, on the current node, the BGP router advertisement message to the next node.

10. The method according to claim 9, wherein transmitting, on the current node, the BGP router advertisement message to the next node comprises:
transmitting, in a case that a BGP session is configured between the current node and the next node and an address family related to the BGP router advertisement message is enabled, on the current node, the BGP router advertisement message to the next node.

11. The method according to any one of claims 1-5, after acquiring, on a current node, a BGP router advertisement message transmitted by a previous node, the method further comprises:
determining, in a case that a plurality of nodes in the propagation path comprise the current node, a next node after the current node in the propagation path in the information of the propagation path; and
transmitting, in a case that no BGP session is configured between the current node and the next node, but a route reflector is pre-configured to transparently transmit the BGP router advertisement message, on the current node, the BGP router advertisement message to the route reflector.

12. The method according to claim 9, wherein transmitting, on the current node, the BGP router advertisement message to the next node comprises:
modifying the BGP next-hop node in the forwarding direction indicated by the BGP router advertisement message to the current node, and obtaining an updated BGP router advertisement message; and
transmitting, on the current node, the updated BGP router advertisement message to the next node.

13. The method according to claim 12, wherein in a case that the BGP next-hop node in the forwarding direction indicated by the BGP router advertisement message is modified to the current node, the method further comprises:
generating, on the current node, a BGP-intent routing table entry, wherein the BGP-intent routing table entry comprises information configured to represent the underlying transport path, and the information configured to represent the underlying transport path comprises at least one of: a transport delay of the underlying transport path or bandwidth information of the underlying transport path.

14. The method according to any one of claims 1-5, wherein before acquiring, on a current node, a BGP router advertisement message transmitted by a previous node, the method further comprises:
acquiring intent information of a service, which is required to undergo communication, between the network ingress node and the network egress node, wherein the service which is required to undergo communication corresponds to the propagation path, and the intent information represents a total-metric from a node at one end to a node at the other end of the propagation path; and
configuring the information of the propagation path according to the intent information, wherein a sum of metrics indicated by instruction information corresponding to nodes in the information of the propagation path is equal to the total-metric, and the metric comprises at least one of: a delay metric, a traffic engineering metric or an interior gateway protocol metric.

15. The method according to claim 14,
wherein acquiring intent information of a service, which is required to undergo communication, between the network ingress node and the network egress node comprises: acquiring, in a case that the service which is required to undergo communication comprises P services, P pieces of intent information of the P services, wherein P is 1 or a positive integer greater than or equal to 2, and each piece of intent information represents a total-metric from a node at one end to a node at the other end of a corresponding propagation path; and
wherein configuring the information of the propagation path according to the intent information comprises: configuring information of P propagation paths according to the P pieces of intent information, wherein a sum of metrics indicated by instruction information corresponding to nodes in information of each complete propagation path is equal to a total-metric represented by corresponding intent information.

16. The method according to claim 15, wherein after configuring information of P propagation paths according to the P pieces of intent information, the method further comprises:
carrying the information of the P propagation paths in the BGP router advertisement message.

17. The method according to any one of claims 1-5, wherein the instruction information comprises at least one of: transport delay requirement information, bandwidth requirement information or path affinity requirement information.

18. The method according to claim 17, wherein in a case that the instruction information comprises the transport delay requirement information, a transport delay of the underlying transport path is less than or equal to a transport delay indicated by the transport delay requirement information.

19. An apparatus for processing a router advertisement messages, comprising:
a first acquisition module configured to acquire, on a current node, a border gateway protocol (BGP) router advertisement message transmitted by a previous node, wherein the BGP router advertisement message carries information of a propagation path, the propagation path is a path in a direction from a network egress node to a network ingress node, the BGP router advertisement message indicates a BGP next-hop node in a forwarding direction, and the forwarding direction is a direction from the network ingress node to the network egress node; and
a first determination module configured to determine, in a case that the BGP next-hop node and the current node are two adjacent nodes on the propagation path, an underlying transport path from the current node to the BGP next-hop node according to instruction information corresponding to the current node of the information of the propagation path.

20. The apparatus according to claim 19, wherein in a case that the instruction information comprises the transport delay requirement information, a transport delay of the underlying transport path is less than or equal to a transport delay indicated by the transport delay requirement information.

21. A computer-readable storage medium, storing a computer program, wherein the computer program is configured to, when executed by a processor, implement steps of the method according to any one of claims 1-18.

22. An electronic apparatus, comprising a memory, a processor and a computer program stored on the memory and capable of being run on the processor, wherein the processor is configured to execute the computer program to implement steps of the method according to any one of claims 1-18.
